# EUROPEAN PATENT SPECIFICATION

(11) **EP 1 020 690 B1**
(45) Date of publication and mention of the grant of the patent: **03.08.2005**
(21) Application number: 00100443.1
(22) Date of filing: 10.01.2000
(51) Int. Cl.: F25B 41/06, G05D 23/12

(54) **Expansion valve**
Entspannungsventil
Robinet détendeur

(30) Priority: 03.09.1999 JP 24948199; 28.09.1999 JP 27355999; 13.01.1999 JP 589499
(43) Date of publication of application: 19.07.2000
(73) Proprietor: TGK Co., Ltd., Tokyo 193-0942 (JP)
(72) Inventor: Hirota, Hisatoshi, Hachioji-shi, Tokyo (JP); Saeki, Shinji, Hachioji-shi, Tokyo (JP); Sendo, Isao, Hachioji-shi, Tokyo (JP); Kawahata, Masaichi, Hachioji-shi, Tokyo (JP); Shiota, Toshiyuki, Hachioji-shi, Tokyo (JP); Kobayashi, Takashi, Hachioji-shi, Tokyo (JP)
(74) Representative: Grünecker, Kinkeldey, Stockmair & Schwanhäusser Anwaltssozietät

(56) References cited:
- EP-A- 0 513 568
- EP-A- 0 736 737
- EP-A- 0 871 000
- DE-A- 2 343 046
- PATENT ABSTRACTS OF JAPAN vol. 017, no. 562 (M-1494), 12 October 1993 (1993-10-12) & JP 05 157406 A (T G K:KK), 22 June 1993 (1993-06-22)
- PATENT ABSTRACTS OF JAPAN vol. 1998, no. 02, 30 January 1998 (1998-01-30) & JP 09 257341 A (TGK CO LTD), 3 October 1997 (1997-10-03)

## Description

The present invention relates to an expansion valve according to the preamble part of claim 1.

In known expansion valves the valve body is moved in relation to said valve seat to open and close said valve seat corresponding to the temperature and the pressure of low-pressure refrigerant exiting the evaporator. The valve body is moved by an axially retractable rod which is guided along its shaft line in a penetration bore of the valve casing. The rod is actuated by a power element operating corresponding to the temperature and the pressure of low-pressure refrigerant. In operation it may occur that due to some reasons the pressure of the high-pressure refrigerant supplied into the expansion valve significantly varies at the upstream side of the valve body. The pressure variations are transmitted to the valve body. In case the pressure raises upstream the valve body a pressure depending force acts on the valve body in closing direction and consequently pushes the rod repeatedly. As a result, due to the closing or increasing throttling effect of the valve body the pressure of the refrigerant on the upstream side also is increasing and the occurring pressure variation even is multiplied. This might lead to an extremely unstable operation of the expansion valve.

As disclosed in JP H 9-222 268 the operation of a known expansion valve is stabilised by applying energy in lateral direction to the rod, e.g. by a spring or the like. As a result, the valve body cannot respond as sensitively anymore to a variation of the pressure. However, the spring should behave passively during a stable operation of the expansion valve and only should act in case of pressure variations of the high-pressure refrigerant. As a result, the structure of the expansion valve is complicated as well as the assembling work, and the costs for manufacturing and assembling the expansion valve are high.

The expansion valve known from EP 0 871 000 A1 uses a central straight rod for transmitting the actuating force from the power element to the valve body. An upper portion of the straight rod is guided in the penetration bore of the valve casing and additionally is sealed by an O-ring secured in place by a locking nut. As a consequence of the central coaxial force transmission from the power element to the valve body no lateral forces will be generated in the rod.

The expansion valve known from EP-A-0736 737 employs three actuating rods which are regularly distributed about the central axis of the expansion valve. The three rods commonly abut with their upper ends at a diaphragm plate and with their lowers ends at a top surface of a piston-like body carrying the valve body. The actuating rods are axially slidably guided in penetration bores of the valve casing. The piston-like body as well is axially guided in the interior of the valve casing. As a consequence, no lateral forces are acting on the actuating rods.

It is an object of the invention to provide an expansion valve performing a stabilised operation even in case of variations of the pressure of the high-pressure refrigerant and having an extremely simple and low cost design.

Said object is achieved by the features of claim 1. Since the forces originating from the power element and applied to the rod held between the power element and valve body as well as for the valve body closing spring and even forces resulting from a pressure rise upstream of the valve body now are applied as couple forces, as a result, the forces applied to the rod from both its ends act to rotate or to bend the rod. Thus, a large frictional resistance occurs when the rod tends to slide axially. The valve body is disabled to respond too sensitively to a pressure change of the high-pressure refrigerant. Furthermore, it is possible to achieve a stable operational behaviour of the expansion valve by an extremely simple and cheap structure. During normal and stable operation of the expansion valve the couple forces may not gain significant influence. In other words, only in case that both ends of the rod are loaded by oppositely directed, significant forces the couple forces increase the sliding resistance of the rod temporarily in order to stabilise the operation. This is the consequential effect of the couple forces tending to rotate or bend or displace the rod sidewardly in firmer contact with the wall of the penetrating bore guiding the rod. The structure is simple and cheap, because the structural measures for the generation of the couple forces can easily be realised in the design of the expansion valve without complicating its design or the work necessary to assemble the expansion valve.

Preferred embodiments are disclosed in the depending claims.

### Brief description of the drawings.

- Fig. 1: is a longitudinal cross-section of the first embodiment of an expansion valve,
- Fig. 2: is a longitudinal section of a second embodiment of an expansion valve,
- Fig. 3: is a longitudinal section of a third embodiment of an expansion valve,
- Fig. 4: is a longitudinal section of a fourth embodiment,
- Fig. 5: is a longitudinal section of a fifth embodiment,
- Fig. 6: is a partial cross-section of a variation of the fifth embodiment,
- Fig. 7: is a partial cross-section of a second variation of the fifth embodiment,
- Fig. 8: is a perspective view of a detail of the fifth embodiment,
- Fig. 9: is a longitudinal section of a further variation of the fifth embodiment,
- Fig. 10: is a longitudinal section of a further variation of the fifth embodiment,
- Fig. 11: is a perspective view of a variation of a detail of the fifth embodiment,
- Fig. 12: is a longitudinal section of a further variation of a detail of the fifth embodiment,
- Fig. 13: is a perspective view of the further variation of the detail of the fifth embodiment,
- Fig. 14: is a longitudinal section showing a further variation of details of the fifth embodiment,
- Fig. 15: is a longitudinal section showing a further variation of a detail of the fifth embodiment,
- Fig. 16: is a longitudinal section of a sixth embodiment,
- Fig. 17: is a longitudinal section of a seventh embodiment, and
- Fig. 18: is a longitudinal section of an eighth embodiment of an expansion valve.

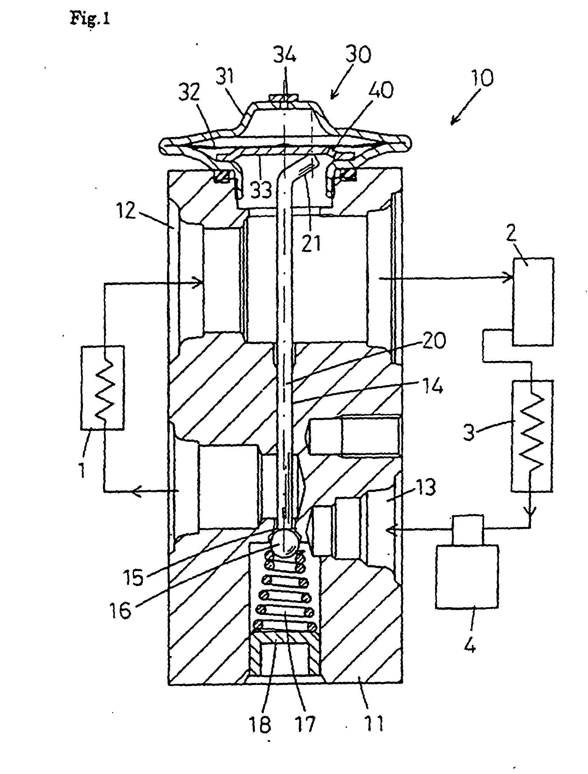

In Fig. 1 a refrigerant cycle, e.g. an air conditioning system for an automotive vehicle, comprises an evaporator 1, a compressor 2, a condenser 3, an accumulator 4 connected to the outlet of the condenser 3 and an expansion valve 10.

A valve casing 11 of the expansion valve 10 contains a low-pressure refrigerant duct 12 for passing low-temperature and low-pressure refrigerant gas as supplied from the evaporator 1 into the compressor 2 and a separate high-pressure refrigerant duct 13 for adiabatically expanding high-temperature and high-pressure refrigerant fluid supplied to the evaporator 1.

Ducts 12 and 13 are approximately parallel to another. Perpendicular to both ducts 12, 13 a penetrating bore 14 extends between both ducts 12, 13 in valve casing 11. Aligned with the penetrating bore 14 a power element 30 is installed into an opening of the valve casing 11. Said opening extends from duct 12 to the outer side of the valve casing 11.

Duct 13 is formed with a contraction in its middle portion so that a valve seat bore 15 is defined. In flow direction through duct 13 upstream of valve seat bore 15 a valve body 16, e.g. a spherical valve body, is associated to valve seat bore 15. Valve body 16 is pre-loaded in closing direction against valve seat bore 15 by a compression coil spring 17 held in place by a spring receiver 18.

Penetrating bore 14 receives rod 20 so that rod 20 is axially slidably guided in the direction of its shaft line. An upper end part of rod 20 reaches to the lower surface of power element 30. A middle part of rod 20 crosses duct 12 and is in engagement with penetrating bore 14. The lower end of rod 20 passes through valve seat bore 15 and contacts valve body 16. The diameter of rod 20 in its portion penetrating valve seat bore 15 is smaller than the inner diameter of valve seat bore 15.

Power element 30 is hermetically encapsulated by a housing 31 made of a thick metallic plate. Power element 30 contains a diaphragm 32, e.g. made of a flexible and thin metallic plate, e.g. of stainless steel with a thickness of e.g. 0.1 mm.

In an upper chamber of power element 30 a saturated vapour gas is contained which might be the same gas as is used as the refrigerant flowing through ducts 12 and 13. A plug 34 blocks a filling bore of power element 30.

Against the lower surface of diaphragm 32 a large diaphragm receiver 33, e.g. in the form of a plate, is disposed. The upper end part of rod 20 is contacting the lower surface of diaphragm receiver 33.

In order to transmit the actuating force of power element 30 to rod 20 by couple forces or by a momentum or bending momentum an upper end part 21 of rod 20 is slightly bent sidewardly, e.g. with an angle of about 60° in relation to the shaft line of rod 20. The, e.g. rounded end of end part 21 is contacting the lower surface of diaphragm receiver 33. As long as valve body 16 is not seated on valve seat bore 15 rod 20 is loaded from both ends by the force of power element 30 and force of valve closure spring 17. In the embodiment of Fig. 1 the central axis of diaphragm receiver 33 is aligned with an extension line of the shaft line of rod 20. A point where the force of power element 30 is applied onto rod 20 or its end parts 21 is laterally offset with respect to the central axis of diaphragm receiver 33.

Diaphragm receiver 33 has at least a refrigerant bore 40 controlling the transmission of low-pressure refrigerant to the lower surface of diaphragm 32 so that power element 30 is not affected by sudden temperature changes of the low-pressure refrigerant. If the temperature of the low-pressure refrigerant in duct 12 decreases, also the temperature of diaphragm 32 drops. The saturated vapour gas in power element 30 starts to condense on diaphragm 32. Consequently, the pressure in power element 30 drops and diaphragm 32 is displaced upwardly. Rod 20, loaded by compression coil spring 17, follows the motions of diaphragm 32. Valve body 16 moves towards valve seat bore 15 and reduces the cross-section for the high-pressure refrigerant flow. The flow rate of the refrigerant supplied to the evaporator 1 decreases. To the contrary, with raising temperature in duct 12 power element 30 presses down rod 20 moving valve body 16 away from valve seat bore 15. The flow rate of the high-pressure refrigerant supplied to the evaporator increases. Due to the bent end part 21 of rod 20 the forces applied from power element 30 and compression coil 17 to rod 20 act as couple forces tending to rotate or bend rod 20 in a direction changing the direction of the shaft line. Since rod 20 is guided by the inner wall of penetrating bore 14 while 17 moves in the direction of its shaft line, as a result, extreme or temporarily increased frictional resistance occurs between rod 20 and penetrating bore 14. In case that the pressure of the high-pressure refrigerant in duct 13 is varied, rod 20 due to the retarding sliding resistance does not sensitively respond. The switching operation of valve body 16 is stabilised.

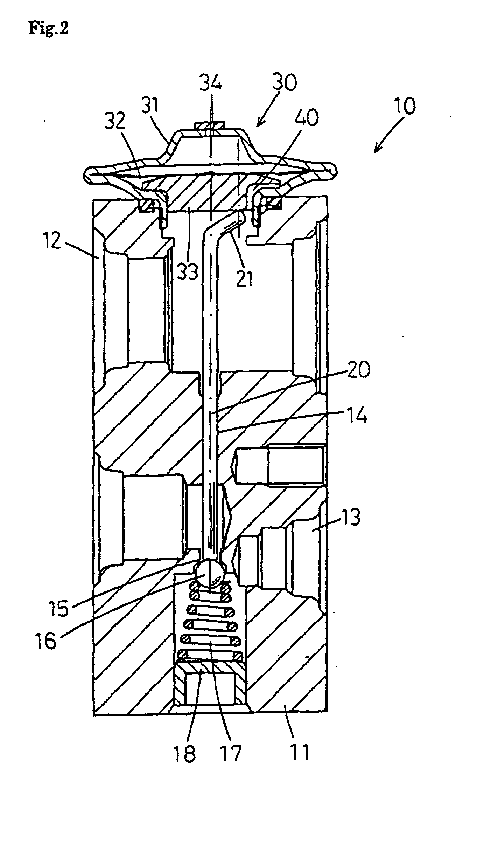

In the second embodiment of the expansion valve 10 in Fig. 2 the diaphragm receiver 33 contacted by end part 21 of rod 20 is made of thick plastic material with low thermal conductivity.

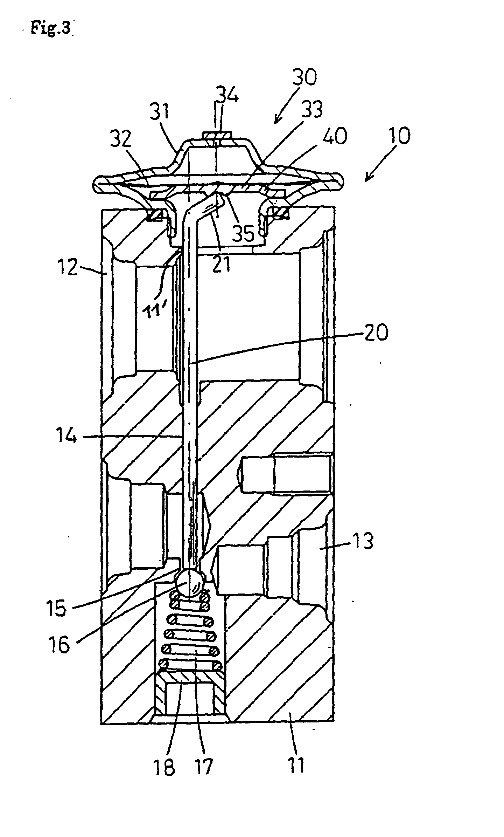

In the third embodiment of the expansion valve 10 of Fig. 3 slightly bent end part 21 of rod 20 contacts diaphragm receiver 33 at the position of its central axis. However, the shaft line of rod 20 as well as penetrating bore 14 are laterally offset with respect to the central axis of power element 30. At the centre of the lower surface of diaphragm receiver 33 a circular concave part 35 is formed receiving the tip of bent end part 21. Between the opening of valve casing 11 containing housing 31 of power element 30 and duct 12 a guiding projection 11' is formed for additionally guiding and laterally supporting rod 20.

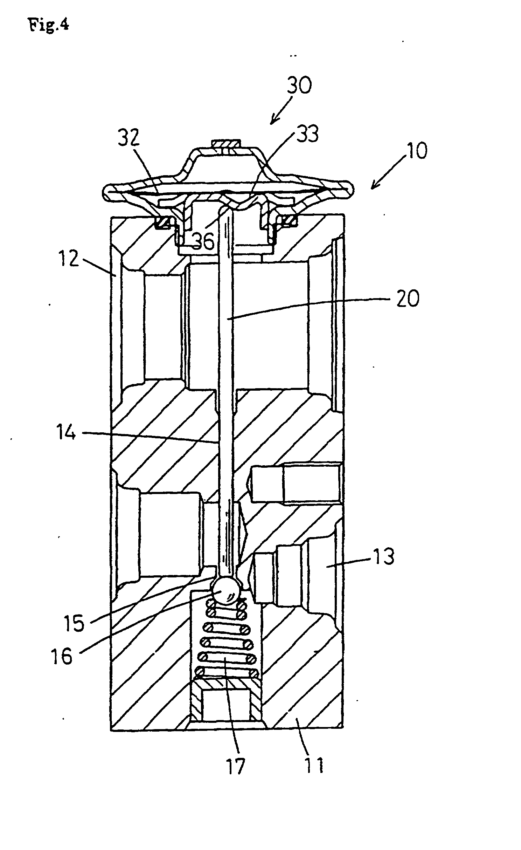

In the fourth embodiment of expansion valve 10 in Fig. 4 rod 20 is straight such that its upper end part is in line with its shaft line. The central axis of power element 30 is aligned with the shaft line of rod 20 as well. However, a misalignment between the central axis of power element 30 and shaft line of rod 20 also would be tolerable. Diaphragm receiver 33 is formed with a slanted abutment surface 36 contacting the upper, in this case rounded, tip of rod 20. Said tip can be smoothly rounded or may have another shape like the shape of a cone or other kinds of shapes. Due to the slanted or inclined abutment surface 36 the force applied by power element 30 to rod 20 is forming couple forces.

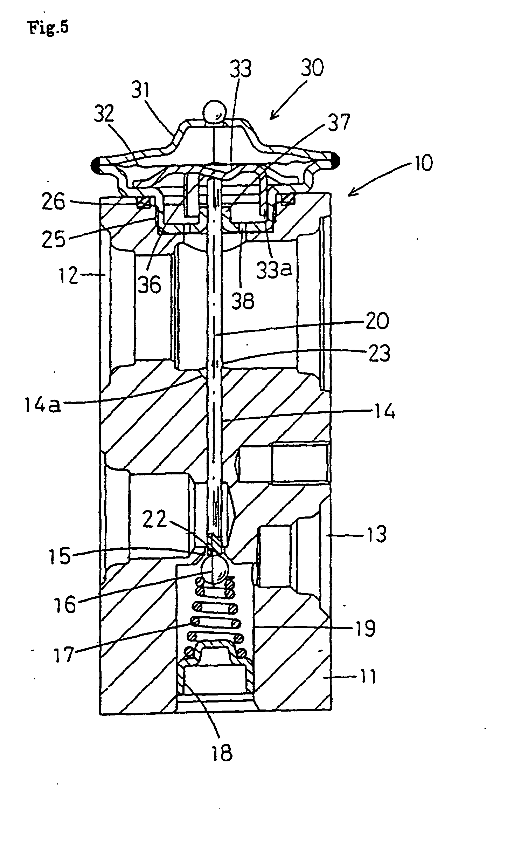

In the fifth embodiment of expansion valve 10 of Fig. 5 further improvements are provided. Valve body 16 can be made of metal, and is, e.g. a stainless steel balls. The mouth of valve seat bore 15 can be conical. Compression coil spring 17 has a tapering shape such that its winding diameter is gradually decreasing towards valve body 16. Spring 17 is made of metal like stainless steel. Valve body 16 may be directly fixed to the end winding of spring 17 by welding or the like. Due to this, valve body 16 cannot be lost from spring 17 during assembling. Furthermore, valve body 16 and spring 17 are easy to recycle in case that both their materials have the same quality. Spring receiver 18 of spring 17 is housed in a bore 19 the axis of which is aligned with the axis of valve seat bore 15. Spring receiver 18 is press-fitted in bore 19. Preparation of the fixation of spring receiver 18 does not create chips, because a threaded connection is avoided. Spring receiver 18 is of cylindrical form and has an inner closed end surface. The fixing position of spring receiver 18 is adjusted when assembling the expansion valve such that the spring force of compression coil spring 17 has a proper value. In order to secure airtightness for spring receiver 18 without using a seal means like an O-ring, a screw-lock or welding or the like can be used instead. The airtight fixation also could be achieved by a spring back effect when using a spring material for the spring receiver 18.

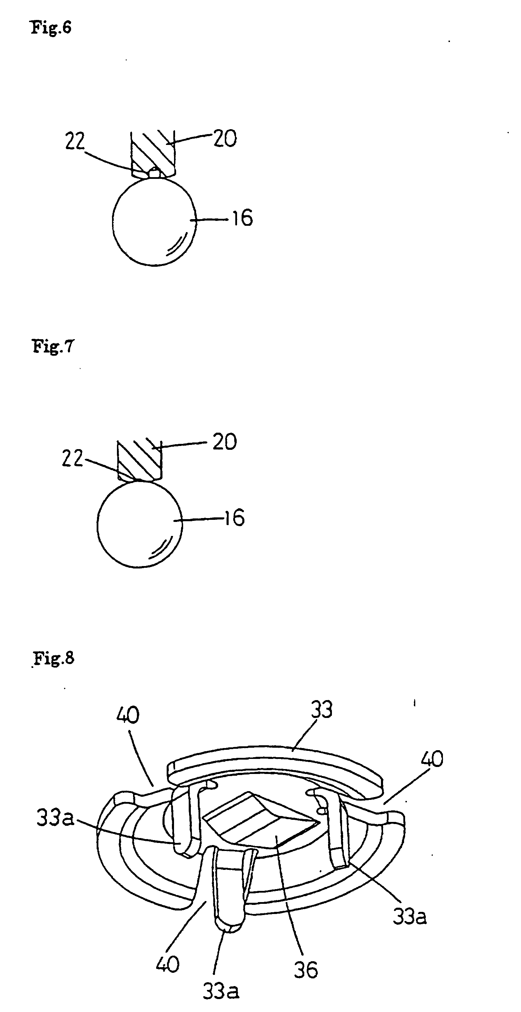

The lower end of rod 20 has a V-shaped or similarly shaped concave depression 22 where rod 20 is contacting valve body 16. As a result, valve body 16 does not lose contact with rod 20 and does not create vibration sound. Concave depression 22 can be, e.g. as shown in Figs 6 and 7, with a U-shape or a V-shape and a smaller diameter than the outer diameter of rod 20.

In Fig. 5 the engagement length between rod 20 and penetrating bore 14 may be about 10 to 15 mm or more. The clearance of rod 20 in penetrating bore 14 is about 0.01 to 0.12 mm so that rod 20 is controlled to be loose. Said slide fit also controls or suppresses vibration sounds generated by valve body 16.

Rod 20 is provided with a projecting part 23 higher up than an opening part 14a of penetrating bore 14 in duct 12. Projecting part 23 can be formed by crushing or squeezing rod 20 laterally. Projecting part 23 hinders that rod 20 can slide down through penetrating bore 14. This holds rod 20 stably during assembly. Opening part 14a can be shaped conically.

All parts of power element 30 can be made, e.g. of the same metallic material like stainless steel. When disassembling expansion valve 10 it is possible to recycle removed power element 30.

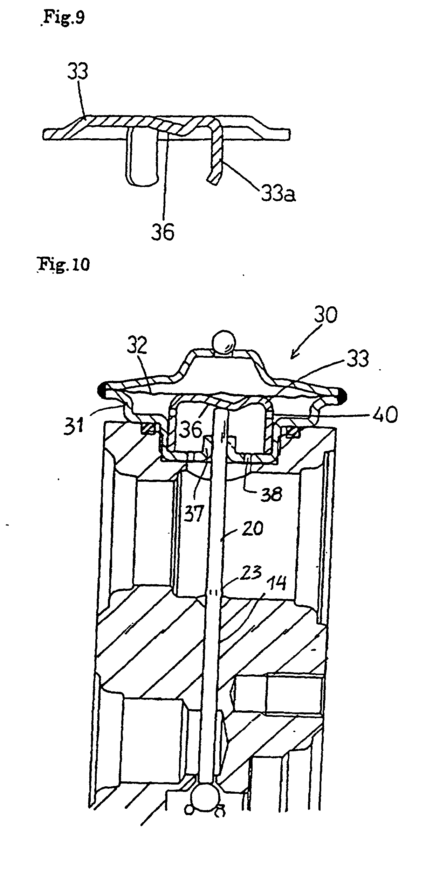

As a variation of the fifth embodiment in Fig. 8 diaphragm receiver 33 is a plate having three leg parts 33a formed by bending. Diaphragm receiver 33 can be produced by pressing a board material. Slanted or inclined abutment surface or slope 36 is formed at the central portion of diaphragm receiver 33. The angle of surface 36 in relation to the plane of diaphragm 32 lies within a range of about 5° to 25°. If said angle would be larger or too large, the sliding force is increased and hysteresis might occur. A too small angle would lead to a negative effect. Leg parts 33a have to stabilise the posture of or have to guide diaphragm receiver 33 along an inner surface of housing 31 of power element 30. Furthermore, by bending leg parts 33a downwardly from the plane of diaphragm receiver 33 notches are created serving as refrigerant ducts 40. As shown in Fig. 9 the lower tips of leg parts 33a can be bent inwardly. Said measure avoids that leg parts 33a can be caught at the inner guiding surface of housing 31. The movement of diaphragm receiver 33 in the direction of the shaft line of rod 20 becomes smoother.

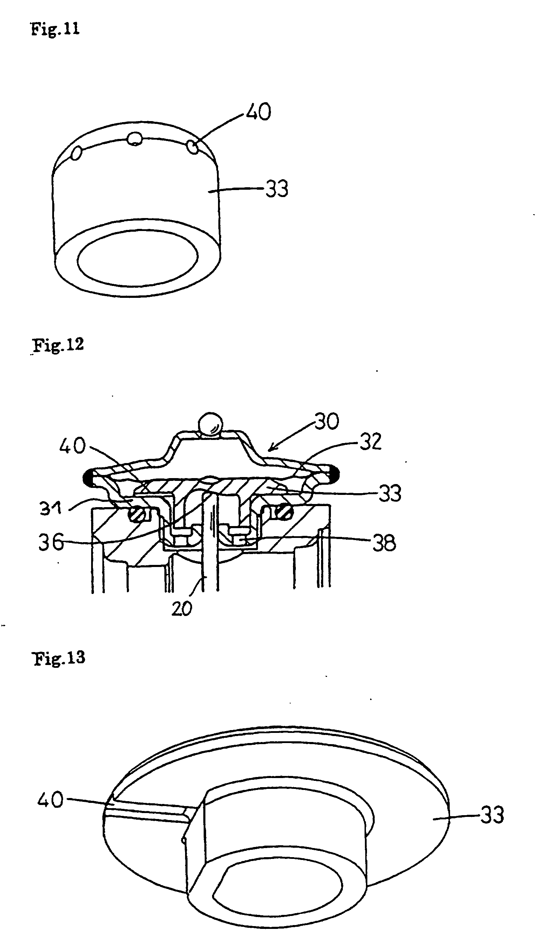

In Figs 10 and 11 diaphragm receiver 33 is formed as a cap. Refrigerant duct 40 is formed as a small diameter bore.

In Figs 12 and 13 diaphragm receiver 33 is formed as the head of a rivet by forging or the like. The refrigerant duct 40 is formed as a groove in the lower surface of said rivet head and a flattened portion in the collar of diaphragm receiver 33 used to guide the linear motion of diaphragm receiver 33. Fig. 12 shows that housing 31 of power element 30 has a bottom defining a guiding bore or guiding collar for the upper end part of rod 20 engaging at rod 20 distant from slanted or inclined surface 36 in the direction of the shaft line. Additional bores 38 allow the entrance of low-pressure refrigerant into housing 31 and further along duct 40 to the lower side of diaphragm 32. A similar design is shown in Fig. 5, already.

In Fig. 5 housing 31 is formed with an engaging part 25 for engagement with the inner wall of the opening in valve casing 11. Engaging part 25 forms a guiding collar 37 for the upper end part of rod 20 spaced apart in the direction of shaft line of rod 20 from inclined surface 36. A sealing means 26 below housing 31 and in a groove of valve casing 11 can be used as well. Guiding collar or rod receiver 37 slidably engages rod 20 in order to control the slide fit of rod 20 and to avoid the generation of noise. Bores 38 in the bottom of housing 31 are provided for passing refrigerant with a small flow rate to the diaphragm 32 of power element 30. Due to these variations of temperature and pressure of the refrigerant are transmitted slowly to diaphragm 32. Therefore, the operation of expansion valve 10 does not change suddenly.

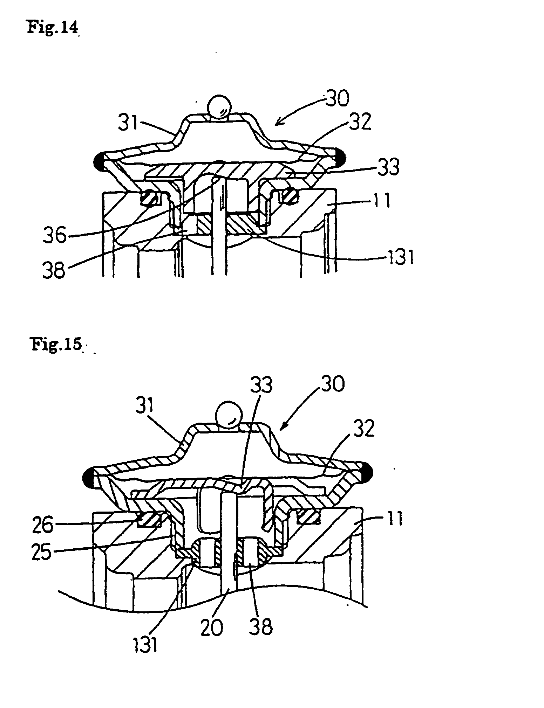

In Fig. 14 a bushing 131, e.g. made of plastic or the like, is held between power element 30 and valve casing 11. Bushing 131 is provided with bore 38.

In Fig. 15 a symmetrical bushing 131 is provided as a middle part between power element 30 and the bottom of the opening receiving housing 31 of power element 30. Due to the symmetrical shape of bushing 131 it can be assembled in any position facilitating assembling.

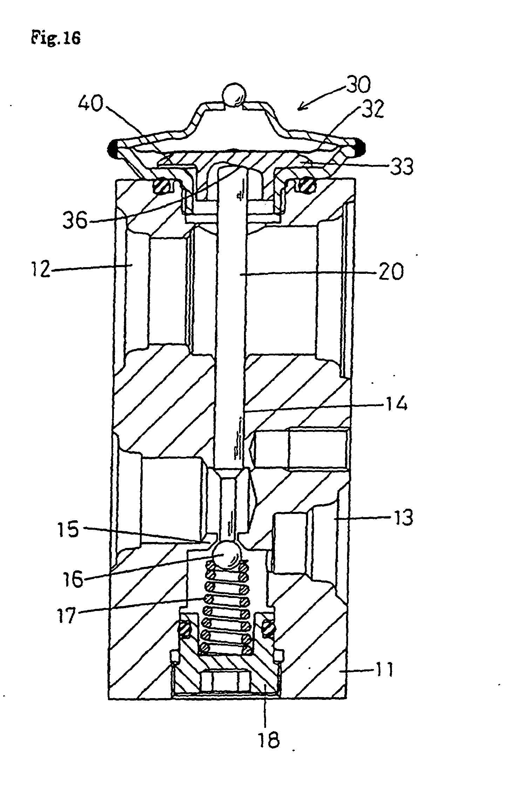

In the embodiment of Fig. 16 rod 20 is formed as a thickened pole in its portion extending through penetrating bore 14 and further upward to inclined surface 36. Spring receiver 18 in this case is installed by a threaded connection in valve casing 11.

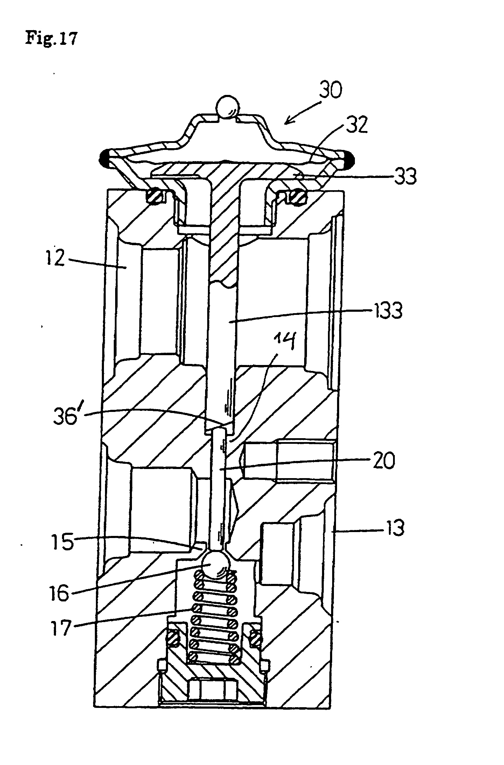

In the embodiment of Fig. 17 rod 20 is short and extends only slightly into an upper widened portion of penetrating bore 14. A thicker pole-shaped straight part 133 the shaft line of which is aligned with the shaft line of rod 20 or is in parallel line with it, extends through said widened portion and between the upper end of rod 20 and diaphragm receiver 33. In Fig. 17 part 133 is unitary with diaphragm receiver 33. The lower end surface of part 133 contacting the upper end of rod 20 is formed as a slope or inclined surface 36'. Forces transmitted between rod 20 and part 133 generate respective laterally directed forces due to inclined surface 36'. Said forces increase the sliding resistance of rod 20 and/or part 133 in penetrating bore 14.

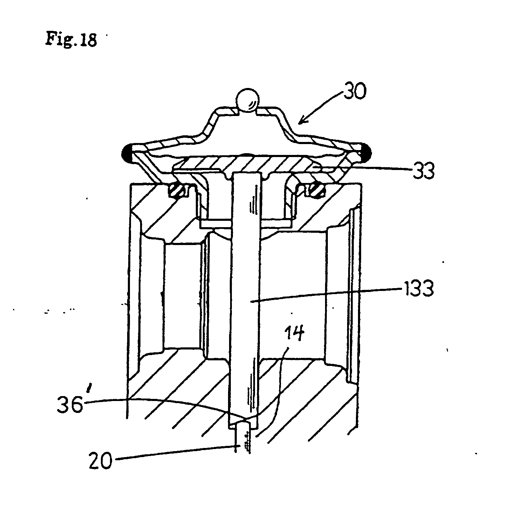

In the embodiment of Fig. 18 thicker pole-shaped part 133 is made of a material different from the material of diaphragm receiver 33. Part 133 can be connected with diaphragm receiver 33 via a socket provided at the lower surface of diaphragm receiver 33.

According to the invention the forces acting on both ends of rod 20 cause a longitudinal compression of said rod 20. Due to the lateral offset between the point where the force of the power element is transmitted to the upper end of rod 20 and the shaft line where the rod is guided in penetrating bore 14 or in the guiding collar 37 and where the force of valve body 16 is applied, the sliding resistance of said rod at least temporarily is increased due to intentionally created lateral retarding forces. Temporarily means that this effect mainly takes place when the upwardly directed force of valve body 16 increases due to a pressure variation upstream of valve body 16 to then stabilise the operation behaviour of the expansion valve 10. During normal operation said retarding forces need not necessary affect the operation. However, even during normal operation the stabilising effect can be used.

## Claims

1. An expansion valve (10), particularly for a refrigeration cycle, comprising a high-pressure refrigerant duct (13) and a valve seat bore (15) in a valve casing (11) formed by a thin contraction of the high-pressure refrigerant duct, a valve body (16) arranged opposite to the valve seat bore, and an axially retractable and longitudinally guided rod (20) located in at least one penetrating bore (14) of the valve casing (11)between a power element (30) and the valve body (16), the power element (30) operating the axially retractably guided rod (20) corresponding to temperature and pressure of a low-pressure refrigerant supplied from an evaporator (1) through a low-pressure refrigerant duct (12), the high-pressure refrigerant duct (13) supplying high-pressure refrigerant from upstream into the evaporator (1), **characterised in that** the rod (20)
either has a straight middle and a lower part defining a shaft line of the rod (20) and an upper sidewardly bent end part (21) which contacts the power element (30) at a point which is laterally offset of the shaft line, or
is continuously straight and has an upper end part in line with the shaft line which end part contacts an abutment surface (36, 36') of the power element (30), the abutment surface (36, 36') being slanted in relation to the shaft line,
in order to generate a couple by the operating force of the power element (30) applied to the rod.

2. Expansion valve as in claim 1, **characterised in that** an extended line of the shaft line of the rod (20) passes at least almost through a central axis of the power element (30).

3. Expansion valve as in claim 1, **characterised in that** the point of application of the operating force is positioned at a central axis of the power element (30).

4. Expansion valve as in claim 1, **characterised in that** the power element (30) is provided with a diaphragm means (32) co-acting with a diaphragm receiver (33) having a receiving part co-acting with the rod upper end part, the receiving part being situated between the power element (30) and the low-pressure refrigerant duct (12).

5. Expansion valve as in claim 4, **characterised in that** the diaphragm receiver (33) is part of a housing (31) of the power element (30).

6. Expansion valve as in claim 4, **characterised in that** the diaphragm receiver (33) comprises at least one refrigerant passing bore (40) for a retarded transmission of temperature and pressure of the refrigerant in the low-pressure refrigerant duct (12) to the power element (30).

7. Expansion valve as in claim 1, **characterised in that** a longitudinally extended pole-shaped part (133) extends from the side of the power element (30) coaxially to the straight rod (20) and to the upper end part of the straight rod (20), that the pole-shaped part (133) includes the slanted abutment surface (36') for contacting the straight rod upper end part.

8. Expansion valve as in claim 4, **characterised in that** the diaphragm receiver (33) is slidably guided in the direction of the shaft line of the rod (20) in housing (31) of the power element (30).

9. Expansion valve as in claim 4, **characterised in that** the diaphragm receiver (33) has a circular concave receiving part (35) for co-action with the rod (20).

10. Expansion valve as in claim 1, **characterised in that** the power element (30) has a housing (31), and that the housing (31) is provided with an additional penetrating bore (37) for additionally axially guiding the rod (20).

## Patentansprüche

1. Expansionsventil (10), insbesondere für einen Kühlkreis, mit einem Hochdruck-Kältemittel-Durchgang (13) und einer Ventilsitzbohrung (15) in einem Ventilgehäuse (11), die gebildet wird durch eine dünne Verengung des Hochdruck-Kältemittel-Durchgangs, einem gegenüberliegend zu der Ventilsitzbohrung angeordneten Ventilkörper (16), und einer axial zurückziehbaren und in Längsrichtung geführten Stange (20), die in zumindest einer Durchgangsbohrung (14) des Ventilgehäuses (11) zwischen einem Antriebselement (30) und dem Ventilkörper (16) angeordnet ist, wobei das Antriebselement (30) die axial zurückziehbar geführte Stange (20) korrespondierend mit dem Druck und der Temperatur eines Niederdruck-Kältemittels betätigt, das durch einen Niederdruck-Kältemittel-Durchgang (12) von einem Verdampfer (1) zugeführt wird, und der Hochdruck-Kältemittel-Durchgang (13) Hochdruck-Kältemittel stromauf in den Verdampfer (1) zuführt,
**dadurch gekennzeichnet,**
**dass** die Stange (20)
entweder einen geraden mittleren und einen unteren Teil aufweist, die eine Achslinie der Stange (20) definieren, sowie einen oberen, seitwärts gebogenen Endteil (21), der das Antriebselement (30) an einem Punkt kontaktiert, der seitlich gegenüber der Achslinie versetzt ist, oder
durchgehend gerade ist und einen oberen Endteil in Ausrichtung mit der Achslinie hat, welcher Endteil eine Anlagefläche (36, 36') des Antriebselements (30) kontaktiert, wobei die Anlagefläche (36, 36') in Relation zu der Achslinie schräg gestellt ist,
um durch die auf die Stange ausgeübte Betätigungskraft des Antriebselementes (30) ein Kräftepaar zu generieren.

2. Expansionsventil nach Anspruch 1, **dadurch gekennzeichnet, dass** eine verlängerte Linie der Achslinie der Stange (20) zumindest nahezu durch eine Mittelachse des Antriebselementes (30) hindurchgeht.

3. Expansionsventil nach Anspruch 1, **dadurch gekennzeichnet, dass** der Punkt der Aufbringung der Betätigungskraft in einer Mittelachse des Antriebselementes (30) positioniert ist.

4. Expansionsventil nach Anspruch 1, **dadurch gekennzeichnet, dass** das Antriebselement (30) mit einer Membraneinrichtung (32) versehen ist, die zusammenwirkt mit einem Membranaufnehmer (33), der einen Aufnahmeteil besitzt zum Zusammenwirken mit dem oberen Endteil der Stange, wobei der Aufnahmeteil zwischen dem Antriebselement (30) und dem Niederdruck-Kältemittel-Durchgang (12) angeordnet ist.

5. Expansionsventil nach Anspruch 4, **dadurch gekennzeichnet, dass** der Membranaufnehmer (33) Teil eines Gehäuses (31) des Antriebselements (30) ist.

6. Expansionsventil nach Anspruch 4, **dadurch gekennzeichnet, dass** der Membranaufnehmer (33) zumindest eine Kältemittel-Durchgangs-Bohrung (40) für eine verzögerte Übertragung von Temperatur und Druck des in dem Niederdruck-Kältemittel-Durchgang (12) enthaltenen Kältemittels zu dem Antriebselement (30) umfasst.

7. Expansionsventil nach Anspruch 1, **dadurch gekennzeichnet, dass** sich von der Seite des Antriebselements (30) koaxial zu der geraden Stange (20) und zu dem oberen Endteil der geraden Stange (20) ein sich längs erstreckender stabförmiger Teil (133) erstreckt, und dass der stabförmige Teil (133) eine schräge Anlagefläche (36') zum Kontaktieren des oberen Endteils der geraden Stange umfasst.

8. Expansionsventil nach Anspruch 4, **dadurch gekennzeichnet, dass** der Membranaufnehmer (33) in Richtung der Achslinie der Stange (20) im Gehäuse (31) des Antriebselementes (30) gleitend geführt ist.

9. Expansionsventil nach Anspruch 4, **dadurch gekennzeichnet, dass** der Membranaufnehmer (33) zur Zusammenwirkung mit der Stange (20) einen kreisförmigen konkaven Aufnahmeteil (35) aufweist.

10. Expansionsventil nach Anspruch 1, **dadurch gekennzeichnet, dass** das Antriebselement (30) ein Gehäuse (31) aufweist, und dass das Gehäuse (31) mit einer zusätzlichen Durchgangsbohrung (37) zum zusätzlichen axialen Führen der Stange (20) versehen ist.

## Revendications

1. Détendeur (10), particulièrement pour un cycle de réfrigération, comprenant une conduite de réfrigérant haute pression (13) et un alésage de siège (15) dans un carter de clapet (11) formé par un fin rétrécissement de la conduite de réfrigérant haute pression, un corps de clapet (16) disposé en face de l'alésage de siège, et une tige (20) axialement rétractable et guidée longitudinalement située dans au moins un alésage de pénétration (14) du carter de clapet (11) entre un élément de puissance (30) et le corps de clapet (16), l'élément de puissance (30) qui commande la tige (20) guidée par rétractation axiale en fonction de la température et de la pression d'un réfrigérant basse pression provenant d'un évaporateur (1) par une conduite de réfrigérant basse pression (12), la conduite de réfrigérant haute pression (13) fournissant le réfrigérant haute pression provenant de l'amont dans l'évaporateur (1),
**caractérisé en ce que** la tige (20)
soit a une partie médiane droite, une partie inférieure définissant une ligne d'arbre de la tige (20) et une extrémité supérieure courbée latéralement (21) entrant en contact avec l'élément de puissance (30) en un point qui latéralement décalé par rapport à la ligne d'arbre, ou
est droite sur sa totalité et a une partie d'extrémité supérieure alignée avec la ligne d'arbre dont l'extrémité entre en contact avec une surface d'appui (36, 36') de l'élément de puissance (30), la surface d'appui (36, 36') étant inclinée par rapport à la ligne d'arbre,
pour produire un couple par la force de commande de l'élément de puissance (30) appliquée à la tige.

2. Détendeur selon la revendication 1, **caractérisé en ce que** la ligne prolongée de la ligne d'arbre de la tige (20) passe au moins pratiquement par un axe central de l'élément de puissance (30).

3. Détendeur selon la revendication 1, **caractérisé en ce que** le point d'application de la force de commande se trouve sur l'axe central de l'élément de puissance (30).

4. Détendeur selon la revendication 1, **caractérisé en ce que** l'élément de puissance (30) comporte un moyen de diaphragme (32) co-agissant avec un diaphragme récepteur (33) ayant une partie réceptrice co-agissant avec la partie d'extrémité supérieure de la tige, la partie réceptrice étant située entre l'élément de puissance (30) et la conduite de réfrigérant basse pression (12).

5. Détendeur selon la revendication 4, **caractérisé en ce que** le diaphragme récepteur (33) fait partie d'un carter (31) de l'élément de puissance (30).

6. Détendeur selon la revendication 4, **caractérisé en ce que** le diaphragme récepteur (33) comprend au moins un alésage de passage de réfrigérant (40) pour une transmission retardée de la température et de la pression du réfrigérant dans la conduite de réfrigérant basse pression (12) vers l'élément de puissance (30).

7. Détendeur selon la revendication 1, **caractérisé en ce qu'**une partie en forme de barreau étendu longitudinalement (133) s'étend à partir du côté de l'élément de puissance (30) sur le même axe que la tige droite (20), et que l'extrémité supérieure de la tige droite (20) que la partie en forme de barreau (133) comprend la surface d'appui inclinée (36') pour entrer en contact avec la partie d'extrémité supérieure de la tige droite.

8. Détendeur selon la revendication 4, **caractérisé en ce que** le diaphragme récepteur (33) est guidé de façon à coulisser dans le sens de la ligne d'arbre de la tige (20) dans le carter (31) de l'élément de puissance (30).

9. Détendeur selon la revendication 4, **caractérisé en ce que** le diaphragme récepteur (33) a une partie circulaire concave réceptrice (35) pour co-agir avec la tige (20).

10. Détendeur selon la revendication 1, **caractérisé en ce que** l'élément de puissance (30) a un carter (31), et que le carter (31) comporte un alésage de pénétration supplémentaire (37) pour guider en outre la tige (20) dans l'axe.
